# EUROPEAN PATENT SPECIFICATION

(11) **EP 2 529 888 B1**
(45) Date of publication and mention of the grant of the patent: **25.02.2015**
(21) Application number: 11168520.2
(22) Date of filing: 01.06.2011
(51) Int. Cl.: B24D 18/00, B23D 61/18, B23D 65/00, C25D 7/06

(54) **Method and apparatus for making a fixed abrasive wire**
Verfahren und Vorrichtung zur Herstellung eines festen Schleifdrahts
Procédé et appareil de fabrication d'un fil abrasif fixe

(43) Date of publication of application: 05.12.2012
(73) Proprietor: Chung-Shan Institute of Science and Technology, Armaments, Bureau, Ministry of National Defense, Taoyuan County 325, Chinese Taipei (TW)
(72) Inventor: Huang, Hong-Ting, Taoyuan County 325 (TW); Tso, Ching-Yu, Taoyuan County 325 (TW); Yeh, Shang-wanq, Taoyuan County 325 (TW); Shy, Hsiou-Jeng, Taoyuan County 325 (TW)
(74) Representative: Lang, Christian

(56) References cited:
- EP-A1- 2 277 660
- WO-A1-2006/019163
- JP-A- 62 110 975
- US-A1- 2007 128 994

## Description

### BACKGROUND OF INVENTION

### 1. FIELD OF INVENTION

The present invention relates to a fixed abrasive wire and, more particularly, to a method and apparatus for making a fixed abrasive wire.

### 2. RELATED PRIOR ART

The photoelectrical industry has been booming recently. There is a growing need for precious, hard and brittle materials such as silicon wafers, sapphire and agate. Silicon wafers are essential for the development of integrated circuits. The silicon wafers are sliced into dies for integrated circuits. During the slicing of the silicon wafers, there is always loss of materials, and the slicing of the wafers is hence expensive. There is a need for an excellent wafer-slicing process.

A wafer can be sliced with a sawing wire. The sawing wire may be operated in a free abrasive manner or a fixed abrasive manner. In the free abrasive manner, a wire is used with abrasive paste for slicing. The efficiency and precision of the free abrasive operation are low, and the consumption of the abrasive paste pollutes the environment.

In the fixed abrasive manner, abrasive grains are fixed to a wire by adhesive, electroplating or electro-less plating for example. The efficiency and precision of the fixed abrasive operation are high, and there is no waste related to the disposal of any abrasive paste. Therefore, the fixed abrasive operation is popular. '

A method for making a fixed abrasive wire by electroplating was devised by Ken-Ichi Ishikawa in 1994. In the method, a tank that contains abrasive grains such as diamond grains is used as a composite electroplating tank. A wall of the tank is made with apertures of a diameter of 10 mm and coated with a Teflon film that is 3 µm thick. The abrasive grains are restrained in the tank by the Teflon film while nickel-based electroplating liquid is allowed to flow through the tank. A wire electrically connected to the cathode of a power supply is buried in the abrasive grains and electroplated in the electroplating liquid so that some of the abrasive grains can be fixed to the wire. However, the area of the contact of the electroplating liquid with the wire is small, and the electroplating takes a long time. Furthermore, it is difficult to control the amount and distribution of the abrasive grains fixed to the wire.

In a typical method for making a fixed abrasive wire by adhesive, abrasive grains are fixed to a wire by adhesive that includes copper, tin or titanium in a high-temperature chamber filled with inert gas or a high-temperature vacuum chamber. The control over the abrasive grains is good. However, the wire and abrasive grains could be damaged in the high-temperature chamber, and mechanical properties of the resultant fixed abrasive wire are jeopardized.

WO 2006/019163 A1 relates to a production device and method for extra-long tools including a plurality of cathodes and a plurality of sleeve-like anodes disposed in a tank with plating solutions, wherein a wire-like raw material contacted to the cathodes is transported trough the plating solution, partially covered by the anode in order to fix abrasive grains to the raw material. However, the mentioned device and method shows the disadvantage that the raw material might contact the anode and cause a short.

US 2007/0128994 A1 describes a method for producing electroplated abrasive tools, wherein abrasive grains are adhered to a mold and afterwards attached to an electrically conductive substrate in an electrolytic way. However, this method requires the production of a mold which uses adhesive for attaching the abrasive grains into the mold, which is time consuming.

The foregoing methods for making fixed abrasive wires are not without problems. Therefore, the present invention is intended to obviate or at least alleviate the problems encountered in prior art.

### SUMMARY OF INVENTION

It is an objective of the present invention to provide a method for making a fixed abrasive wire via electroplating, which allows to control the density and uniformity of the abrasive grains fixed to the wire.

This object is solved by the method for making a fixed abrasive wire according to claim 1 and by the apparatus for making a fixed abrasive wire according to claim 9. Advantageous improvements of the invention are subject matter of dependent claims.

To achieve the foregoing objective, the method includes the step of inserting a wire through a sleeve including at least one aperture defined therein, the step of locating the wire and the sleeve in electroplating liquid including abrasive grains blended therein, and the step of executing electroplating to fix some of the abrasive grains to the wire.

The sleeve includes at least one open end in a shape selected from the group consisting of circular, oval, triangular or rectangular. The diameter of the open end of the sleeve is 1 to 20 mm.

The aperture is circular, oval, triangular or rectangular. The diameter of the aperture is 0.05 to 10 mm.

The abrasive grains are made of silicon carbide, baron carbide, tungsten carbide, baron nitride, diamond, aluminum oxide, zirconium oxide or quartz. The diameter of the abrasive grains is 1 to 60 µm.

The sleeve is located in a vertical, horizontal or inclined manner.

It is another objective of the present invention to provide a method for making a fixed abrasive wire via electro-less plating.

To achieve the foregoing objective, the method includes the step of inserting a wire through a sleeve including at least one aperture defined therein, the step of locating the wire and the sleeve in electroplating liquid including abrasive grains blended therein, and the step of executing electro-less plating to fix some of the abrasive grains to the wire.

The sleeve includes at least one open end in a shape selected from the group consisting of circular, oval, triangular or rectangular. The diameter of the open end of the sleeve is 1 to 20 mm.

The aperture is circular, oval, triangular or rectangular. The diameter of the aperture is 0.05 to 10 mm.

The abrasive grains are made of silicon carbide, baron carbide, tungsten carbide, baron nitride, diamond, aluminum oxide, zirconium oxide or quartz. The diameter of the abrasive grains is 1 to 60 µm.

The sleeve is located in a vertical, horizontal or inclined manner.

It is another objective of the present invention to provide an apparatus for making a fixed abrasive wire.

To achieve the foregoing objective, the apparatus includes a tank, reaction liquid filled in the tank, abrasive grains mixed in the reaction liquid, a sleeve including at least one aperture defined therein. The sleeve is submerged in the reaction liquid in the tank. A wire is moved through the sleeve while some of the abrasive grains are fixed to the wire.

The reaction liquid may be electro-less plating liquid.

Alternatively, the reaction liquid may be electroplating liquid. In this case, the apparatus further includes a power supply located outside the tank and at least one anode plate submerged in the reaction liquid filled in the tank and electrically connected to the anode of the power supply.

Other objectives, advantages and features of the present invention will be apparent from the following description referring to the fixed drawings.

### BRIEF DESCRIPTION OF DRAWINGS

The present invention will be described via detailed illustration of several embodiments referring to the drawings wherein:
FIG. 1 is a front view of an apparatus for making a fixed abrasive wire according to the first embodiment of the present invention;
FIG. 2 is perspective view of a sleeve of the apparatus shown in FIG. 1;
FIG. 3 is a flow chart of a method for making a fixed abrasive wire according to the second embodiment of the present invention;
FIG. 4 is a front view of an apparatus for making a fixed abrasive wire according to the third embodiment of the present invention;
FIG. 5 is a SEM photograph of a fixed abrasive wire made according to the present invention;
FIG. 6 is a SEM photograph of another fixed abrasive wire made according to the present invention; and
FIG. 7 is a SEM photograph of another fixed abrasive wire made according to the present invention.

### DETAILED DESCRIPTION OF EMBODIMENTS

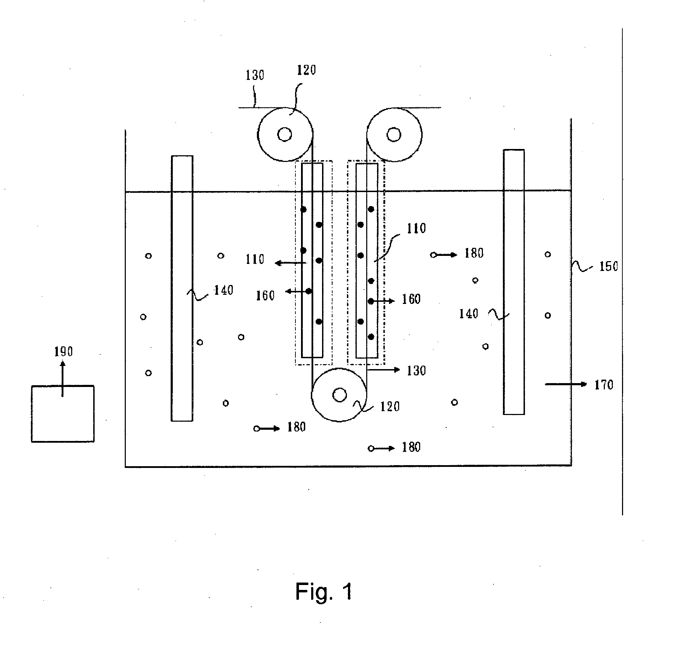

Referring to FIG. 1, there is shown an apparatus for making a fixed abrasive wire according to a first embodiment of the present invention. The apparatus includes two sleeves 110, three wheels or pulleys 120 and a tank 150. The tank 150 is filled with reaction liquid 170. Abrasive grains 180 are mixed in the reaction liquid 170.

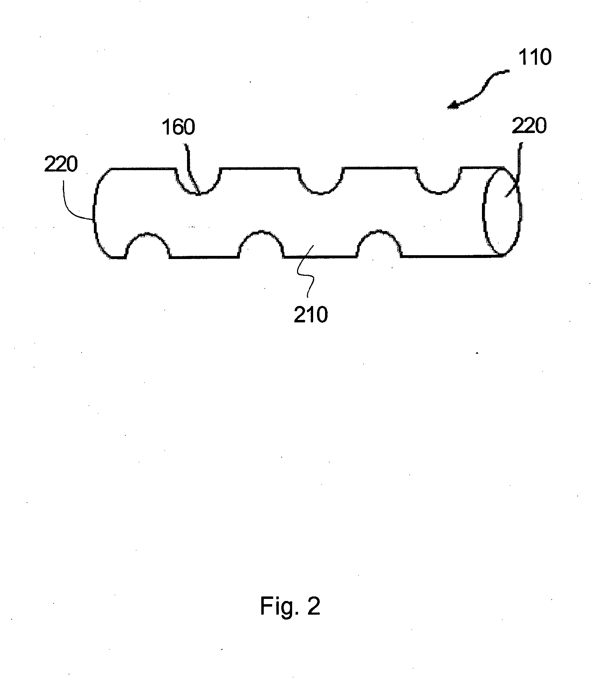

Referring to FIG. 2, each of the sleeves 110 includes a tubular wall 210 formed with two open ends 220 and apertures 160 transversely defined in the tubular wall 210. The open ends 220 may be circular, oval, triangular, rectangular or in any other proper shape. The diameter of the open ends 220 is 1 to 20 mm if the open ends 220 are circular. The largest diameter of the open ends 220 is 1 to 20 mm if the open ends 220 are in another shape.

The apertures 160 may be circular, oval, triangular, rectangular or in any other proper shape. The diameter of the apertures 160 is 0.05 to 10 mm if the open ends 220 are circular. The largest diameter of the apertures 160 is 0.05 to 10 mm if the open ends 220 are in another shape. The apertures 160 are distributed regularly or irregularly.

Referring to FIG. 1, the sleeves 110 are submerged in the reaction liquid 170 filled in the tank 150. The sleeves 110 extend vertically in the tank 150 as shown; however, the sleeves 110 can extend horizontally or in an inclined manner in the tank 150.

Two of the wheels 120 (the "upper wheels 120") are located outside the tank 150 while the other wheel 120 (the "lower wheel 120") is located in the tank 150. Each of the sleeves 110 is located between a related one of the upper wheels 120 and the lower wheel 120.

There are two sleeves 110 and three wheels 120 as shown; however, there can be only one sleeve 110 or any other proper number of sleeves 110 and a corresponding number of wheels 120.

The reaction liquid 170 may be electro-less plating liquid or electroplating liquid. The apparatus includes only the sleeves 110, the wheels 120 and the tank 150 if the reaction liquid 170 is electro-less plating liquid.

The apparatus includes at least one anode plate 140 and a power supply 190 in addition to the sleeves 110, the wheels 120 and the tank 150 if the reaction liquid 170 is electroplating liquid. The anode plate 140 is submerged in the reaction liquid 170 filled in the tank 150 and electrically connected to the anode of the power supply 190.

The diameter of the abrasive grains 180 is 1 to 60 µm. The abrasive grains 180 may be made of silicon carbide, baron carbide, tungsten carbide, baron nitride, diamond, aluminum oxide, zirconium oxide or quartz.

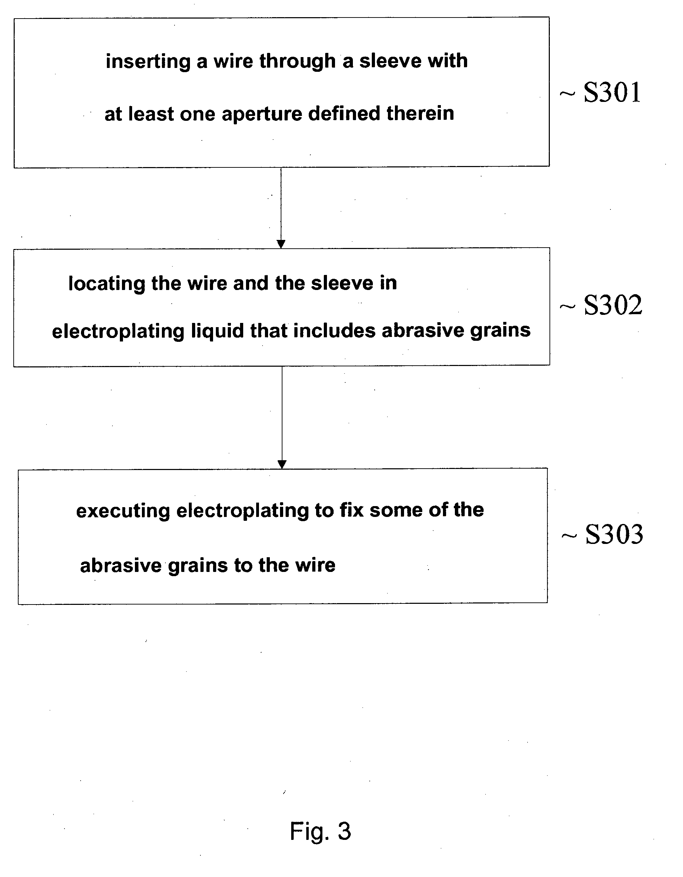

Referring to FIG. 3, there is shown a method for making a fixed abrasive wire in an electroplating manner. At S301, a wire 130 is wound around the wheels 120 so that a section thereof is inserted through one of the sleeves 110 while another section thereof is inserted through the other sleeve 110. The wire 130 is moved through the sleeves 110 as it is driven by the wheels 120. The wire 130 is electrically connected to the cathode of the power supply 190.

At S302, the wire 130 and the sleeves 110 are submerged in the electroplating liquid 170 filled in the tank 150.

At S303, the power supply 190 is turned on to execute electroplating. Thus, the abrasive grains 180 move toward the wire 130 via the apertures 160, and some of the abrasive grains 180 are fixed to the wire 130. The wire 130 and the abrasive grains 180 fixed to the wire 130 become a fixed abrasive wire for slicing.

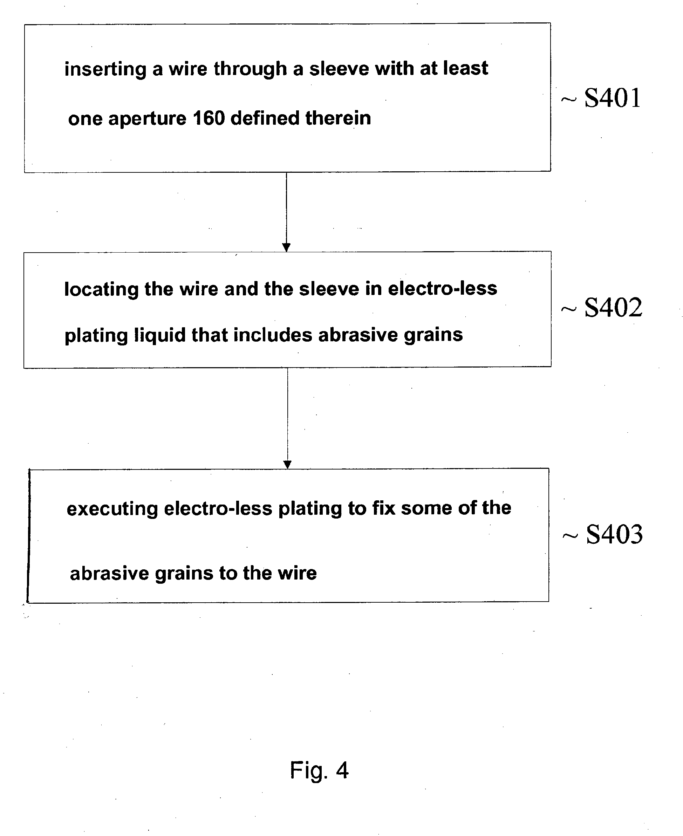

Referring to FIG. 4, there is shown a method for making a fixed abrasive wire in an electroplating manner. At S401, a wire 130 is wound around the wheels 120 so that a section thereof is inserted through one of the sleeves 110 while another section thereof is inserted through the other sleeve 110. The wire 130 is moved through the sleeves 110 as it is driven by the wheels 120. The wire 130 is electrically connected to the cathode of the power supply 190.

At S402, the wire 130 and the sleeves 110 are submerged in the electro-less plating liquid 170 filled in the tank 150.

At S403, the abrasive grains 180 move toward the wire 130 through the apertures 160 so that some of the abrasive grains 180 are fixed to the wire 130. The wire 130 and the abrasive grains 180 fixed to the wire 130 become a fixed abrasive wire for slicing.

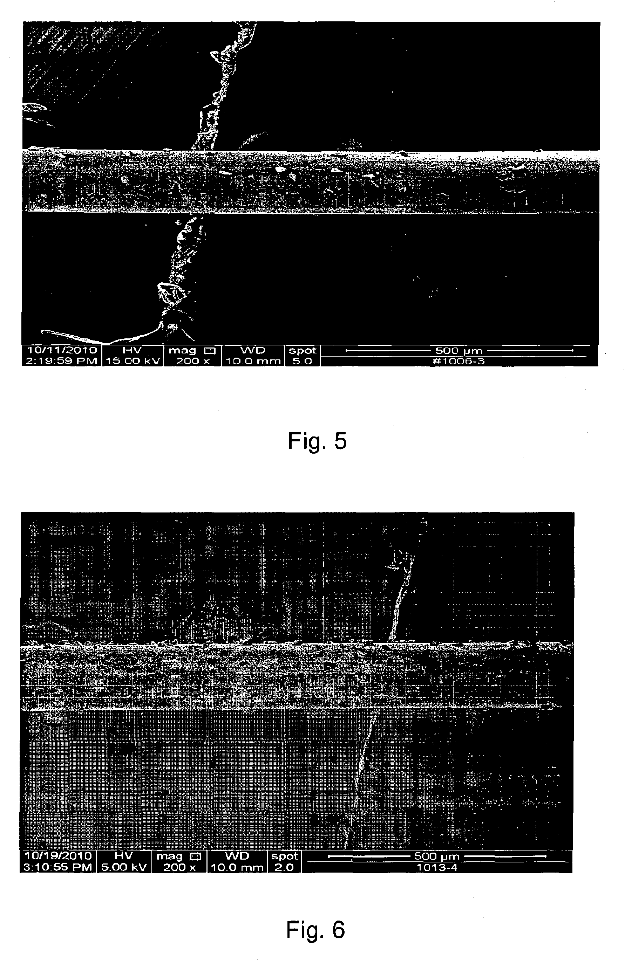

In another embodiment, the reaction liquid 170 is electroplating liquid including 500 grams of Ni(NH₂SO₃)₂. 4H₂O, 10 grams of NiCl. 6H₂O and 40 grams of H₃BO₃. The operative temperature is 40°C to 50°C. The pH value is 3.8 to 40. The current density is 4 A/dm². The average diameter of the abrasive grains 180 is 21 µm. The stirring rate is 350 to 370 rpm. The sleeves 110 are directed vertically in the tank 150. The apertures 160 are distributed on the tubular wall 210 of each of the sleeves 110 in a symmetric manner, and the distance between any two adjacent ones of the apertures 160 is 8 mm. The apertures 160 are circular, and the diameter of the apertures 160 is 0.1 mm. The open ends 220 of the sleeves 110 are circular, and the diameter of the open ends 220 is 4 mm. A SEM photograph of a resultant fixed abrasive wire is shown in FIG. 5. It is shown in the SEM photograph that the abrasive grains 180 are evenly distributed on the wire 130. The density of the distribution of the abrasive grains 180 on the wire 130 is about 55 to 70 grain/mm²_{.}

In another embodiment, the reaction liquid 170 is electroplating liquid including 500 grams of Ni(NH₂SO₃)₂. 4H₂O, 10 grams of NiCl. 6H₂O and 40 grams of H₃BO₃. The operative temperature is 40°C to 50°C. The pH value is 3.8 to 40. The current density is 4 A/dm². The average diameter of the abrasive grains 180 is 21 µm. The stirring rate is 150 to 170 rpm. The sleeves 110 are directed vertically in the tank 150. The apertures 160 are distributed on the tubular wall 210 of each of the sleeves 110 in an alternate manner, and the distance between any two adjacent ones of the apertures 160 is 1.5 mm. The apertures 160 are circular, and the diameter of the apertures 160 is 1.8 mm. The open ends 220 of the sleeves 110 are circular, and the diameter of the open ends 220 is 4 mm. A SEM photograph of a resultant fixed abrasive wire is shown in FIG. 6. It is shown in the SEM photograph that the abrasive grains 180 are evenly distributed on the wire 130. The density of the distribution of the abrasive grains 180 on the wire 130 is about 110 to 140 grain/mm².

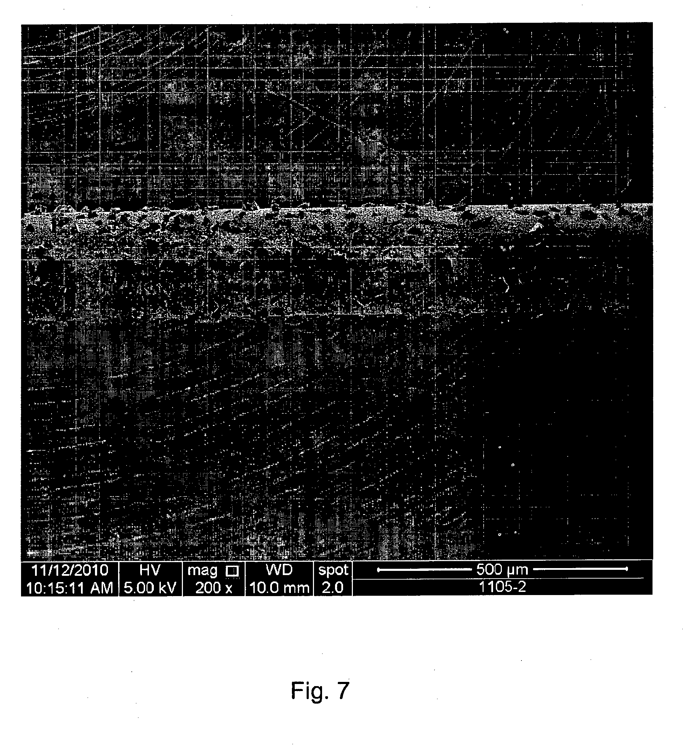

In another embodiment, the reaction liquid 170 is electroplating liquid including 600 grams of Ni(NH₂SO₃)₂. 4H₂O, 12 grams of NiCl. 6H₂O and 42 grams of H₃BO₃. The operative temperature is 55°C to 60°C. The pH value is 3.8 to 40. The current density is 32 A/dm². The average diameter of the abrasive grains 180 is 21 µm. The stirring rate is 150 to 170 rpm. The sleeves 110 are directed horizontally in the tank 150. The apertures 160 are distributed on the tubular wall 210 of each of the sleeves 110 in an alternate manner, and the distance between any two adjacent ones of the apertures 160 is 1.5 mm. The apertures 160 are circular, and the diameter of the apertures 160 is 1.8 mm. The open ends 220 of the sleeves 110 are circular, and the diameter of the open ends 220 is 4 mm. A SEM photograph of a resultant fixed abrasive wire is shown in FIG. 7. It is shown in the SEM photograph that the abrasive grains 180 are evenly distributed on the wire 130. The density of the distribution of the abrasive grains 180 on the wire 130 is about 200 to 280 grain/mm²_{.}

The present invention has been described via the detailed illustration of the embodiments. Those skilled in the art can derive variations from the embodiments without departing from the scope of the present invention. Therefore, the embodiments shall not limit the scope of the present invention defined in the claims.

## Claims

1. A method for making a fixed abrasive wire including the steps of:
inserting a wire (130) through a sleeve (110) including a tubular wall and at least one aperture (160), the at least one aperture being formed in the tubular wall;
locating the wire (130) and the sleeve (110) in electroplating liquid or electro-less plating liquid (170) including abrasive grains (180) blended therein; and
executing electroplating or electro-less plating to fix some of the abrasive grains (180) to the wire (130).

2. The method according to claim 1, wherein the sleeve (110) includes at least one open end (220) in a shape selected from the group consisting of circular, oval, triangular and rectangular.

3. The method according to claim 2, wherein the open end (220) of the sleeve (110) is circular, and the diameter thereof is 1 to 20 mm.

4. The method according to claim 1, wherein the aperture (160) is in a shape selected from the group consisting of circular, oval, triangular and rectangular.

5. The method according to claim 4, wherein the aperture (160) is circular, and the diameter thereof is 0.05 to 10 mm.

6. The method according to claim 1, wherein the abrasive grains (180) are made of a material selected from the group consisting of silicon carbide, baron carbide, tungsten carbide, baron nitride, diamond, aluminum oxide, zirconium oxide and quartz.

7. The method according to claim 1, wherein the abrasive grains (180) are spherical, and the diameter thereof is 1 to 60 µm.

8. The method according to claim 1, wherein the sleeve (110) is located in a manner selected from the group consisting of vertical, horizontal and inclined.

9. An apparatus for making a fixed abrasive wire, the apparatus including:
a tank (150);
reaction liquid (170) filled in the tank (150);
abrasive grains (180) mixed in the reaction liquid (170);
a sleeve (110) including a tubular wall and at least one aperture (160), the at least one aperture being formed in the tubular wall, wherein the sleeve (110) is submerged in the reaction liquid (170) in the tank (150), wherein a wire (130) can be moved through the sleeve (110) while some of the abrasive grains (180) are fixed to the wire (130).

10. The apparatus according to claim 9, wherein the reaction liquid (170) is electro-less plating liquid.

11. The apparatus according to claim 9 or 10, further including:
a power supply (190) located outside the tank (150); and
at least one anode plate (140) submerged in the reaction liquid (170) filled in the tank (150) and electrically connected to the anode of the power supply (190), wherein the reaction liquid (170) is electroplating liquid.

## Patentansprüche

1. Verfahren zur Herstellung eines festen Schleifdrahts umfassend die Schritte:
Einschieben des Drahtes (130) durch eine Hülse (110) mit einer rohrförmigen Wand und wenigstens einer Öffnung (160), wobei die wenigstens eine Öffnung in der rohrförmigen Wand ausgebildet ist,
Eintauchen des Drahtes (130) und der Hülse (110) in eine galvanisierende Flüssigkeit oder eine nicht-galvanische Überzugsflüssigkeit (170), welche darin verteilt Schleifmittelkörner (180) enthält, und
Durchführung einer galvanischen Beschichtung oder einer nichtgalvanischen Beschichtung, um einige der Schleifmittelkörner (180) an dem Draht (130) zu fixieren.

2. Verfahren nach Anspruch 1, wobei die Hülse (110) wenigstens ein offenes Ende (220) in einer Form aufweist, die ausgewählt ist aus einer Gruppe umfassend kreisförmig, oval, dreieckig und rechteckig.

3. Verfahren nach Anspruch 2, wobei das offene Ende (220) der Hülse (110) kreisförmig ist und einen Durchmesser von 1 bis 20 mm aufweist.

4. Verfahren nach Anspruch 1, wobei die Öffnung (160) eine Form aufweist, die ausgewählt ist aus einer Gruppe umfassend kreisförmig, oval, dreieckig und rechteckig.

5. Verfahren nach Anspruch 4, wobei die Öffnung (160) kreisförmig ist und einen Durchmesser von 0.05 bis 10 mm aufweist.

6. Verfahren nach Anspruch 1, wobei die Schleifmittelkörner (180) aus einem Material gefertigt sind, das ausgewählt ist aus einer Gruppe umfassend Siliciumcarbid, Borcarbid, Wolframcarbid, Bornitrid, Diamant, Aluminiumoxid, Zirkoniumoxid und Quartz.

7. Verfahren nach Anspruch 1, wobei die Schleifmittelkörner (180) kugelförmig sind und einen Durchmesser von 1 bis 60 µm aufweisen.

8. Verfahren nach Anspruch 1, wobei die Hülse (110) in einer Weise angeordnet ist, die ausgewählt ist aus einer Gruppe, welche eine vertikale, horizontale und geneigte Anordnung umfasst.

9. Vorrichtung zur Herstellung eines festen Schleifdrahts mit:
einem Behälter (150),
einer Reaktionsflüssigkeit (170), die in den Behälter (150) eingefüllt ist,
Schleifmittelkörnern (180), die in der Reaktionsflüssigkeit (170) verteilt sind,
einer Hülse (110), welche eine rohrförmige Wand und wenigstens eine Öffnung (160) umfasst, wobei die wenigstens eine Öffnung in der rohrförmigen Wand ausgebildet ist, wobei die Hülse (110) in die Reaktionsflüssigkeit (170) in dem Behälter (150) eingetaucht ist, wobei ein Draht (130) durch die Hülse (110) bewegt werden kann, wobei einige der Schleifmittelkörner (180) an dem Draht (130) fixiert werden.

10. Vorrichtung nach Anspruch 9, wobei die Reaktionsflüssigkeit (170) eine nicht-galvanische Überzugsflüssigkeit ist.

11. Vorrichtung nach Anspruch 9 oder 10, außerdem umfassend:
eine Stromversorgung (190), welche sich außerhalb des Behälters (150) befindet, und
wenigstens eine Anodenplatte (140), welche in die Reaktionsflüssigkeit (170), die in dem Behälter (150) eingefüllt ist, eintaucht und elektrisch mit der Anode der Stromversorgung (190) verbunden ist, wobei die Reaktionsflüssigkeit (170) eine galvanisierende Flüssigkeit ist.

## Revendications

1. Procédé de fabrication d'un fil abrasif fixe comprenant les étapes :
d'insertion d'un fil (130) à travers un manchon (110) qui comprend une paroi tubulaire et au moins une ouverture (160), l'ouverture qui existe au moins étant formée dans la paroi tubulaire ;
de placement du fil (130) et du manchon (110) dans un liquide de galvanoplastie ou un liquide de métallisation non électrique (170) qui contient des grains abrasifs (180) qui y sont mélangés et
d'exécution de galvanoplastie ou de métallisation non électrique pour fixer quelques grains abrasifs (180) au fil (130).

2. Procédé selon la revendication 1, le manchon (110) comprenant au moins une extrémité ouverte (220) d'une forme sélectionnée dans le groupe comprenant la forme circulaire, ovale, triangulaire et rectangulaire.

3. Procédé selon la revendication 2, l'extrémité ouverte (220) du manchon (110) étant circulaire et le diamètre de celle-ci étant d'1 à 20 mm.

4. Procédé selon la revendication 1, l'ouverture (160) ayant une forme sélectionnée dans le groupe comprenant la forme circulaire, ovale, triangulaire et rectangulaire.

5. Procédé selon la revendication 4, l'ouverture (160) étant circulaire et le diamètre de celle-ci étant de 0,05 à 10 mm.

6. Procédé selon la revendication 1, les grains abrasifs (180) étant faits en un matériau sélectionné dans le groupe comprenant le carbure de silicium, le carbure de bore, le carbure de tungstène, le nitrure de bore, le diamant, l'oxyde d'aluminium, l'oxyde de zirconium et le quartz.

7. Procédé selon la revendication 1, les grains abrasifs (180) étant sphériques et le diamètre de ceux-ci étant d'1 à 60 µm.

8. Procédé selon la revendication 1, le manchon (110) étant placé d'une manière sélectionnée dans le groupe comportant la position verticale, horizontale et inclinée.

9. Appareil de fabrication d'un fil abrasif fixe, l'appareil comprenant :
un réservoir (150) ;
du liquide de réaction (170) rempli dans le réservoir (150) ;
des grains abrasifs (180) mélangés dans le liquide de réaction (170) ;
un manchon (110) comprenant une paroi tubulaire et au moins une ouverture (160), l'ouverture qui existe au moins étant formée dans la paroi tubulaire, le manchon (110) étant immergé dans le liquide de réaction (170) dans le réservoir (150), un fil (130) pouvant être déplacé à travers le manchon (110) pendant que quelques grains abrasifs (180) sont fixés au fil (130).

10. Appareil selon la revendication 9, le liquide de réaction (170) étant du liquide de métallisation non électrique.

11. Appareil selon la revendication 9 ou 10 comprenant de plus :
une alimentation en énergie (180) située à l'extérieur du réservoir (150) et
au moins une plaque d'anode (140) immergée dans le liquide de réaction (170) rempli dans le réservoir (150) et relié électriquement à l'anode de l'alimentation en énergie (180), le liquide de réaction (170) étant du liquide de galvanoplastie.
